(19) Europäisches Patentamt
European Patent Office
Office européen des brevets

(11) **EP 4 736 999 A1**

(12) **EUROPEAN PATENT APPLICATION**

(43) Date of publication:
06.05.2026 Bulletin 2026/19

(21) Application number: 25209057.6

(22) Date of filing: **16.10.2025**

(51) International Patent Classification (IPC):
**B01J 13/04** (2006.01)  **B29C 44/34** (2006.01)
**B29C 44/60** (2006.01)

(52) Cooperative Patent Classification (CPC):
**B01J 13/04; B29C 44/3461; B29C 44/60;**
B29C 44/3426

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.10.2024 EP 24210160**

(71) Applicant: **Nouryon Chemicals International B.V.
1101 BZ Amsterdam (NL)**

(72) Inventors:
• AJDÉN, Per Erik
  **1101 BZ Amsterdam (NL)**
• HOLMLUND, Ulf Thomas
  **1101 BZ Amsterdam (NL)**
• SVENSSON, Per Olov Fredrik
  **1101 BZ Amsterdam (NL)**

(74) Representative: **Ingrassia, Fisher & Lorenz UK Ltd.
Cambridge House
Henry Street
Bath BA1 1BT (GB)**

(54) **DEVICE FOR PREPARATION OF EXPANDED MICROSPHERES**

(57) The present disclosure relates to a method and a device for producing expanded microspheres.

Fig. 1

**Description**

TECHNICAL FIELD

The present disclosure relates to a method of producing expanded microspheres and a device therefore.

BACKGROUND

Thermally expandable microspheres are known in the art and described in detail in, for example, US Patent No. 3615972. Various grades of expandable microsphere, having different expansion temperature, are commercially available from Nouryon under the trademark Expancel™, both as dry free flowing microspheres and as an aqueous slurry of microspheres.

Such expandable microspheres comprise a blowing agent encapsulated within a thermoplastic shell. Upon heating, the blowing agent evaporates to increase the internal pressure, at the same time as the shell softens, resulting in significant expansion of the microspheres, normally from 2 to 5 times their diameter.

Thermoplastic microspheres can be used in various applications in both unexpanded or pre-expanded states. Examples of products where dry (essentially water free) pre-expanded microspheres are used are as sensitizer in emulsion explosives and as light weight filler in solvent based paints and various thermosetting materials such as cultured marble, polyester putty and artificial wood. In many products, such as water based paints and coatings, thermal printing papers, porous ceramics and emulsion explosives, wet pre-expanded microspheres are used.

Transporting pre-expanded microspheres requires significant space, for which reason the unexpanded microspheres often are transported to the end user wishing to use expanded microspheres and are then expanded on-site. The microspheres may then be expanded close to or directly into a process for producing the final product, e.g. any of those mentioned above.

Various methods and devices have been developed for expanding thermoplastic microspheres.

US 5484815 and US 7192989 disclose methods and devices suitable for expanding dry microspheres.

US 4513106 discloses a method and a device suitable for expanding microspheres in an aqueous slurry by introducing steam to the slurry in a pressure zone in an amount sufficient for heating the microspheres and at least partially expand them, followed by allowing the partially expanded microspheres to leave the pressure zone under a pressure drop whereby the microspheres are further expanded and accelerated into a stream with a velocity of at least 1 m/s.

In WO2014198532 an expander for non-expanded thermally expandable microspheres is described, wherein a slurry of the microspheres in a suitable carrier is brought into a pressure zone and heated without contacting the slurry directly with the heating medium. The heating zone may for example be a heat exchanger. The advantage of the indirect heating, over steam expansion, is that there is no need to introduce (extra) water into the slurry. The indirect heating also allows for other heating- and slurry media than steam and water, and thus creates a wider flexibility in temperature ranges.

The apparatus disclosed in WO2014198532 comprises a heating zone which is capable of withstanding a pressure of at least 4 bars. The apparatus comprises a pump for feeding a slurry of thermally expandable thermoplastic microspheres into the heating zone. The pump is capable of generating a pressure of at least 4 bars in the heating zone. The pressure within the heating zone is maintained such that the thermally expandable thermoplastic microspheres do not fully expand. The apparatus comprises a means for heating the slurry of thermally expandable thermoplastic microspheres in the heating zone to a temperature of at least 60 °C without any direct contact of the slurry to any fluid heat transfer medium. After the microspheres are heated in the heating zone, the slurry is withdrawn from the heating zone and experiences a pressure drop, into a zone with a pressure sufficiently low for the microspheres to start expanding.

A further improvement of an expansion device is described in WO2016091847. To reduce potential agglomeration of expanded particles, the slurry is withdrawn from the heating zone through an outlet pipe, and the microparticles start to expand in the outlet pipe, after they have left the heating zone where they were heated under pressure. in WO2016091847 it is described that the outlet pipe (where the microparticles start to expand) may be attached to a downstream distribution pipe (also referred to as "mixing zone"). The distribution pipe has an inlet for a cooling medium, and the outlet pipe is attached downstream of this inlet to the distribution pipe (or "mixing zone") between the inlet and an outlet of the distribution pipe.

As an additional measure, to keep the pressure in the heating zone sufficiently high, it is thought in WO2016091739 to put a back pressure generator in fluid communication with the heating zone, said back pressure generator being capable of increasing pressure in the heating zone, after which the particles experience a pressure drop and begin to expand (e.g in the "expansion zone" that may take the shape of an outlet pipe as described in WO2016091847). The back pressure generator is capable of restricting and/or controlling the flow of the fluid material through the heating zone (called "treatment zone" in WO2016091739), to ensure that the temperature within the heating zone is sufficient to allow the expandable polymeric microspheres to expand to a desired degree. The back pressure generator may provide increased pressure within the heating zone, and may comprise, for example, a flow control valve or a flow restriction device, such as an orifice nozzle.

A further improvement of an expansion device is described in WO2019192936. By varying the back pressure (counter pressure) in the expansion zone, the final density of the particles could be influenced and particles consistently expanded even to very low densities. The density of the microspheres obtained from the device was determined by taking a sample and measuring it in a lab by drying the sample and measuring in a pycnometer, which is both time consuming and laborious, and which in turn complicates the expanded microsphere quality control (QC) process.

The present disclosure aims to improve upon the expansion device of WO2019192936 by providing a way to automatically control the density of the expanded microspheres, with the overall goal of automation of product QC, thereby substantially increasing the overall effectiveness and efficiency of the expansion device.

## Description

This objective is accomplished by the following apparatus and process. Accordingly, in a first aspect, the present disclosure relates to a device for expanding unexpanded, thermally expandable microspheres comprising:

- a heating zone having an inlet and an outlet, wherein the inlet is configured to receive a slurry of unexpanded, thermally expandable microspheres;
- a first pump upstream of and in fluid communication with the heating zone inlet;
- an expansion zone with an inlet and an outlet, said inlet of the expansion zone being connected to the outlet of the heating zone, wherein the expansion zone is configured to be at a lower pressure than the heating zone;
- a flow control device downstream of and in fluid communication with the outlet of the expansion zone;
- a fluid inlet disposed between the outlet of the expansion zone and the flow control device;
- a fluid metering device configured to control an addition rate of a dilution liquid introduced at the fluid inlet; and
- a controller, wherein at least one of the first pump, the flow control device, and the fluid metering device is operatively linked to the controller, and wherein the controller is programmed to:

    receive at least a first flow rate signal related to a first flow rate generated by the first pump, a second flow rate signal related to a second flow rate generated by the flow control device, and a third flow rate signal related to a third flow rate of the dilution liquid,
    calculate the density of expanded microspheres in response to at least the first flow rate, the second flow rate, and the third flow rate, and
    control the density of the expanded microspheres by controlling at least one of the first flow rate, the second flow rate, and/or the third flow rate.

In a second aspect, the present disclosure relates to a process for expanding unexpanded, thermally expandable microspheres comprising a polymer encapsulating a blowing agent, wherein said blowing agent is a liquid having a boiling temperature not higher than the softening temperature of the polymer shell, the process comprising:

- feeding a slurry of unexpanded, thermally expandable microspheres into a heating zone using a first pump operating at a first pump speed to generate a first flow rate,
- heating the microspheres to a temperature above their softening temperature, while under a pressure sufficiently high to ensure they do not fully expand;
- passing the so-heated microspheres from the heating zone to an expansion zone, such that a pressure drop is created, resulting in a pressure in the expansion zone sufficiently low for the microspheres to expand,
- removing the expanded microspheres from the expansion zone and diluting the expanded microspheres with a dilution liquid introduced at a fluid inlet by a fluid metering device operating at a third flow rate to obtain a final slurry solid content value, and
- transporting the diluted expanded microspheres to a flow control device operating at a second flow rate;

wherein a controller operatively linked to at least one of the first pump, the flow control device, and the fluid metering device calculates the density of expanded microspheres in response to at least the first flow rate, the second flow rate, and the third flow rate, and controls the density of the expanded microspheres by controlling at least one of the first flow rate, the second flow rate, and the third flow rate.

In the device of the first aspect and the process of the second aspect, an initial density value and an initial solid content value may be determined for the slurry of unexpanded, thermally expandable microspheres, and the controller may be further programmed to receive said initial density value and/or said initial solid content value and calculate the density of expanded microspheres in response to the first flow rate, the second flow rate, the third flow rate, and one or both of the initial density value or the initial solid content value. Accordingly, in a preferred embodiment, the present disclosure relates to a device for expanding unexpanded, thermally expandable microspheres comprising:

- a heating zone having an inlet and an outlet, wherein the inlet is configured to receive a slurry of unexpanded, thermally expandable microspheres, the slurry having an initial density value and an initial solid content value;
- a first pump upstream of and in fluid communication with the heating zone inlet;
- an expansion zone with an inlet and an outlet, said inlet of the expansion zone being connected to the outlet of the heating zone, wherein the expansion zone is configured to be at a lower pressure than the heating zone;
- a flow control device downstream of and in fluid communication with the outlet of the expansion zone;
- a fluid inlet disposed between the outlet of the expansion zone and the flow control device;
- a fluid metering device configured to control an addition rate of a dilution liquid introduced at the fluid inlet; and
- a controller, wherein at least one of the first pump, the flow control device, and the fluid metering device is operatively linked to the controller (such that operation of the at least one of the first pump, the flow control device and the fluid metering device can be controlled by the controller), and wherein the controller is programmed to:

  receive a first flow rate signal related to a first flow rate generated by the first pump, a second flow rate signal related to a second flow rate generated by the flow control device, a third flow rate signal related to a third flow rate of the dilution liquid, and one or both of the initial density value or the initial solid content value,
  calculate the density of expanded microspheres in response to the first flow rate, the second flow rate, the third flow rate, and one or both of the initial density value or the initial solid content value, and
  control the density of the expanded microspheres by controlling at least one of the first flow rate, the second flow rate, and the third flow rate.

In another preferred embodiment, the present disclosure relates to a process comprising:

- feeding a slurry of unexpanded, thermally expandable microspheres into a heating zone using a first pump operating at a first pump speed to generate a first flow rate, the slurry having an initial density value and an initial solid content value,
- heating the microspheres to a temperature above their softening temperature, while under a pressure sufficiently high to ensure they do not fully expand;
- passing the so-heated microspheres from the heating zone to an expansion zone, such that a pressure drop is created, resulting in a pressure in the expansion zone sufficiently low for the microspheres to expand,
- removing the expanded microspheres from the expansion zone and diluting the expanded microspheres with a dilution liquid introduced at a fluid inlet by a fluid metering device operating at a third flow rate to obtain a final slurry solid content value, and
- transporting the diluted expanded microspheres to a flow control device operating at a second flow rate;

wherein a controller operatively linked to at least one of the first pump, the flow control device, and the fluid metering device (such that operation of the at least one of the first pump, the flow control device and the fluid metering device can be controlled by the controller) calculates the density of expanded microspheres in response to at least the first flow rate, the second flow rate, the third flow rate, and one or both of the initial density value or the initial solid content value, and controls the density of the expanded microspheres by controlling at least one of the first flow rate, the second flow rate, and the third flow rate.

The device of the first aspect may be used in the process of the second aspect, hence the following description of the features of the device is equally applicable to the process.

_Unexpanded, Thermally Expandable Microspheres_

The unexpanded, thermally expandable microspheres typically comprise a thermoplastic polymer encapsulating a blowing agent, wherein said blowing agent is usually a liquid having a boiling temperature not higher than the softening temperature of the thermoplastic polymer shell. The device according to present disclosure can be used for all kinds of thermally expandable thermoplastic microspheres. As used herein, thermally expandable thermoplastic microspheres refers to a thermoplastic polymer shell encapsulating a blowing agent. When expanded by heat the thermally expandable thermoplastic microspheres are referred to as expanded thermoplastic microspheres.

The thermally expandable thermoplastic microspheres can be those marketed by Nouryon under the trademark Expancel™. Thermally expandable thermoplastic microspheres and their manufacture are disclosed in, for example, US 3,615,972, US 3,945,956, US 4,287,308, US 5,536,756, US 6,235,800, US 6,235,394, US 6,509,384, US 6,617,363, US 6,984,347, US 2004/0176486, EP 486080, EP 566367, EP 1067151, EP 1230975, EP 1288272, EP 1598405, EP 1811007, EP 1964903, WO 2002/096635, WO 2004/072160, WO 2007/091960, WO 2007/091961, WO 2007/142593, JP

**EP 4 736 999 A1**

1987-286534 and JP 2005-272633, which are hereby incorporated herein by reference.

The thermoplastic polymer shell can be made from polymers or co-polymers by polymerising various ethylenically unsaturated monomers. The ethylenically unsaturated monomers can be nitrile containing monomers, such as acrylonitrile, methacrylonitrile, alpha-chloroacrylonitrile, alpha-ethoxyacrylonitrile, fumaronitrile and crotonitrile, acrylic esters, such as methylacrylate or ethyl acrylate, methacrylic esters, such as methyl methacrylate, isobornyl methacrylate and ethyl methacrylate, vinyl halides, such as vinyl chloride, vinylidene halides, such as vinylidene chloride, vinyl pyridine, vinyl esters, such as vinyl acetate, styrene, optionally substituted, such as styrene, halogenated styrenes and alpha-methyl styrene, dienes, such as butadiene, isoprene and chloroprene, and any mixtures thereof.

The ethylenically unsaturated monomers may also comprise crosslinking multifunctional monomers. The crosslinking multifunctional monomers include any one of divinyl benzene, ethylene glycol di(meth)acrylate, diethylene glycol di(meth)acrylate, triethylene glycol di(meth)acrylate, propylene glycol di(meth)acrylate, 1,4-butanediol di(meth) acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, pentaerythritol hexa(meth)acrylate, dimethylol tricyclodecane di(meth)acrylate, triallylformal tri(meth)acrylate, allyl methacrylate, trimethylol propane tri(meth)acrylate, trimethylol propane triacrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate, triallyl isocyanurate or any mixtures thereof. The crosslinking multifunctional monomers make up from 0.1 to 1 wt%, most preferably from 0.2 to 0.5 wt% of the total amounts of ethylenically unsaturated monomers of the thermoplastic polymer shell.

The thermoplastic polymer shell can also be made from biopolymers or bio-co-polymers, such as, but not limited to, those described in EP3678768, EP3713664, EP3880744, EP4153347, EP4294557, EP4126333, EP4126334, and WO 2024/089208.

It is preferable that the thermoplastic polymer shell constitutes from 60 to 95 wt% of the thermally expandable thermoplastic microsphere and more preferably from 75 to 85 wt%.

A softening temperature of the thermoplastic polymer shell corresponds to its glass transition temperature ($T_g$). $T_g$ is preferably within the range of 50 to 250 °C, and more preferably in the range of 60 to 200 °C.

The blowing agent in the thermally expandable thermoplastic microspheres can be a liquid which has a boiling temperature (at room temperature and pressure) not higher than the $T_g$.

The blowing agent can be at least one hydrocarbon or any mixtures thereof. The hydrocarbons can be selected from n-pentane, isopentane, neopentane, butane, isobutane, hexane, isohexane, neohexane, heptane, isoheptane, octane and isooctane. The hydrocarbons can also be petroleum ether, chlorinated or fluorinated hydrocarbons, such as methyl chloride, methylene chloride, dichloro ethane, dichloro ethylene, trichloro ethane, trichloro ethylene and trichlorofluoro methane. The blowing agent is preferably at least one of isobutane, isopentane, isohexane, cyclohexane, isooctane, isododecane, and any mixtures thereof. The blowing agent is more preferably isobutane and isopentane.

The blowing agent is present in an amount of from 5 to 40 wt% of the thermally expandable thermoplastic microspheres.

The boiling temperature (at atmospheric pressure) of the blowing agent is preferably between -20 to 200 °C, more preferably between -20 to 150 °C and even more preferably between -20 to 100 °C.

A temperature at which the thermally expandable thermoplastic microspheres begin expanding at atmospheric pressure is referred to as $T_{start}$. $T_{start}$ depends on the type and combination of the thermoplastic polymer shell and the blowing agent. The thermally expandable thermoplastic microspheres used in the present disclosure preferably have a $T_{start}$ from between 40 to 230 °C and more preferably between 60 to 180 °C.

Unexpanded thermally expandable thermoplastic microspheres may hereinafter be referred to as expandable microspheres. The particle size of expandable microspheres can vary within wide limits and may be selected with respect to the desired properties of the product in which they are used. In most cases, the preferred volume median diameter, as determined by laser light scattering on a Malvern Mastersizer Hydro 2000 SM apparatus on wet samples, is from 1 μm to 1 mm, preferably from 2 μm to 0.5 mm and particularly from 3 μm to 100 μm. The diameter of the microspheres increases at expansion, for example by a factor from 2 to 5.

The liquid medium of the slurry (the carrier liquid) of expandable microspheres may be any liquid that is inert in respect of the microspheres and can withstand the temperature to which the slurry is heated. In many cases water or a water based liquid is preferred, thus forming an aqueous slurry, but depending on the intended use of the expanded microspheres it may also be preferred to use non-aqueous liquids for the slurry, such as at least one of vegetable oil, mineral oil and glycerol, which liquids may be free from water. Since no steam or water in any other form needs to be added to the slurry in the method of the present disclosure, it is possible to prepare water free expanded microspheres that can be used directly in applications where no water is desired. Furthermore, as no other fluid media needs to be added to the slurry, it is possible to prepare expanded microspheres having a high control over the solids content.

The slurry of unexpanded, thermally expandable microspheres has an initial density value and an initial solid content value. "Initial density value" means the density of the slurry of unexpanded, thermally expandable microspheres prior to entering the device of the present disclosure. "Initial solid content value" means the solid content of the slurry of unexpanded, thermally expandable microspheres prior to entering the device of the present disclosure. Both values are routine measurements for such slurries, the measurement of which would be within the routine capabilities of persons skilled in the technical field.

In most commercial methods of producing expandable microspheres they are usually first obtained in an aqueous slurry, and such a slurry can be used directly in the method of the present disclosure, optionally after dilution or dewatering to a desired content of microspheres. On the other hand, such an aqueous slurry may be dried to obtain essentially water free microspheres that can be used for preparing a slurry in a non-aqueous liquid.

The content of expandable microspheres in the slurry depends on what is desired for the product obtained after expansion. The upper limit is limited by the pumpability of the slurry and by the transportability of the slurry through the heating zone. In most cases the content of expandable microspheres is suitably from 5 to 50 wt%, preferably from 10 to 40 wt% and most preferably from 15 to 30 wt%.

*Heating Zone, First Pump & Expansion Zone*

The slurry of expandable microspheres flows through the heating zone that can be made up of any vessel, pipe or tube provided with an inlet and an outlet and capable of withstanding the pressure maintained therein.

The heating zone in the device heats the slurry of expandable microspheres to a temperature above the softening temperature of the thermoplastic polymer in the specific medium used as carrier (the carrier liquid). The slurry may be heated in the heating zone, for example, by a fluid heat transfer medium not being in direct contact with the slurry, electric heating elements or microwaves. For example, the heating zone may comprise a heat exchanger comprising at least one pipe or tube surrounded by a heat transfer medium not being in direct contact with the slurry of expandable microspheres. The heat transfer medium may be any suitable fluid medium such as hot water, steam or oil. As an alternative, heat may be provided by electric heating elements, e.g. inside or outside the heating zone or in the walls thereof, or any combination thereof. As a further alternative, heating may be provided by electromagnetic radiation such as microwaves.

The vessel or the at least one pipe or tube in which the slurry of expandable microspheres flows through the heating zone is preferably of a thermally conductive material like steel or copper, particularly if the heating of the slurry is provided by means of a fluid heat transfer medium or by electric heating elements. If the heating is provided by electromagnetic radiation, the vessel or at least one pipe or tube is preferably of a material permeable for such radiations, such as various polymeric materials.

In a heat exchanger comprising at least one pipe or tube, such at least one pipe or tube may, for example, each have an inner diameter from 5 to 20 mm, preferably from 7 to 15 mm and most preferably from 9 to 12 mm. The thickness of the walls of the at least one pipe or tube is suitably from 0.5 to 3 mm, preferably from 0.7 to 1.5 mm.

If heating is made by means of electric heating elements, such elements may e.g. be provided outside and/or inside at least one pipe or tube, for example a single pipe or tube. Such a pipe or tube may, for example, have an inner diameter from 20 to 80 mm or from 35 to 65 mm. For example, an electric heating element may be provided in the centre inside a pipe or tube so the slurry of expandable microspheres flow in the gap around that heating element. Such an electric heating element may itself be a pipe or tube with the primary electric heating source inside thereof so the heat is transferred through the wall to the slurry flowing in the gap. Preferably electric heating elements are provided both inside and outside the at least one pipe or tube.

The optimal dimensions and the capacity of the means for heating the slurry is determined by the flow rate of slurry, slurry concentration and temperature of incoming slurry and should be sufficient for the slurry to reach a temperature high enough for the microspheres to expand when pressure drops after passing the outlet of the heating zone. This temperature is always higher than the volatilization temperature of the blowing agent of the specific microsphere.

The device is equipped with a first pump upstream of the heating zone for feeding a slurry of unexpanded expandable microspheres in a liquid medium (carrier liquid) into the inlet of the heating zone at a first flow rate. The pump is capable of generating a pressure in the heating zone sufficiently high so the microspheres in the slurry do not fully expand. Examples of suitable pumps include hydraulic diaphragm pumps, piston pumps, screw pumps (e.g. eccentric screw pumps), gear pumps, rotary lobe pumps, centrifugal pumps, etc. Hydraulic diaphragm pumps are particularly preferred. The pump preferably also creates the force for transporting the slurry through the heating zone to the outlet thereof. The device may further be provided with a conduit for transportation of the slurry of expandable microspheres to the pump, for example from a tank holding the slurry.

A signal indicating the first flow rate generated by the first pump may be directly communicated to a controller (controller described in more detail below) by the first pump and/or the device may be further equipped with a first flow sensor disposed between the first pump and the inlet of the heating zone and communicatively linked to the controller, the first flow sensor being configured to provide a first flow rate signal (i.e., a signal indicating the first flow rate of the microsphere slurry generated by the first pump) to the controller. It will be appreciated that alternative techniques for communicating the first flow rate signal from the first pump to the controller are contemplated and fall within the scope of the present disclosure.

In one embodiment, the first pump is operatively linked to the controller, i.e., the first pump may be controlled by the controller, e.g., the pump speed and therefore the first flow rate generated by the first pump may be controlled by the controller. Any suitable arrangement may be used. For example, the first pump may be directly controlled by the controller (i.e., the controller may be directly linked to the first pump and may directly control the speed of the first pump). Alternatively, the first pump may be controlled by the first flow sensor, and the first flow sensor may be controlled by the controller (i.e., the first pump would still be operatively linked to the controller, albeit indirectly). Accordingly, the first pump and/or the first flow sensor may be operatively linked to the controller (i.e., one or both may be controlled by the controller).

The exact pressure required in the heating zone depends on the temperature and the type of microsphere and typically it substantially corresponds to the vapour pressure of the blowing agent of the expandable microspheres. Preferably the pressure maintained in the heating zone is at least 10 bars, most preferably at least 20 bars or at least 30 bars. The upper limit is determined by practical considerations and may, for example, be up to 40 bars or up to 50 bars. The heating zone should thus be capable of withstanding such a pressure.

The temperature of the expandable microspheres in the heating zone is usually essentially the same as the temperature of the slurry therein. The exact temperature to which the slurry is heated depends on the grade of microspheres. For most grades of microspheres the temperature is preferably within the range from 60 to 160°C or from 70 to 150°C, although higher temperatures, such as 200°C or even 250°C or higher may be needed for some grades of microspheres. The means for heating the slurry should thus preferably be capable of heating the slurry to such a temperature.

In the heating zone a flow of slurry of expandable microspheres is transported from the inlet to the outlet and heated under pressure to a temperature high enough for the microspheres to expand when the pressure drops at the outlet of the heating zone and they enter the zone with a sufficiently low pressure. The average residence time of the microspheres in the heating zone is preferably long enough to assure that a sufficiently high temperature of the slurry is reached and maintained for subsequent expansion. In order to assure production of a high and even quality, the device may optionally further be provided with a pulsation damper stabilising the flow of the slurry.

The thermally expandable thermoplastic microspheres do not fully expand in the heating zone when heated, due to the elevated pressure in the heating zone. When leaving the heating zone the microparticles enter an expansion zone. The inlet of the expansion zone is connected to the outlet of the heating zone. In order to maintain a sufficiently high pressure in the heating zone, the slurry of expandable microspheres are withdrawn from the heating zone through an outlet thereof that may be provided with any suitable means for creating a pressure drop corresponding to the pressure difference between inside the heating zone and the expansion zone, preferably a flow area restriction, such as a valve, a nozzle or any other kind of narrow passage. The outlet of the heating zone may, for example, be an insulated pipe or tube having a flow area restriction at the end thereof, such as an opening having a diameter from 0.5 to 0.05 times, preferably from 0.3 to 0.1 times the inner diameter of that pipe or tube. Such a pipe or tube may be stiff or flexible, which, in the latter option, can easily be directed to a desired exit point for the microspheres without moving the entire device.

After the particles leave the heating zone they expand in the "expansion zone". The pressure after the pressure drop, in the expansion zone is sufficiently low for the thermoplastic microspheres to expand. Usually the pressure in the expansion zone is essentially atmospheric pressure but may be maintained higher (or lower) depending on the required density of the microspheres. To keep the temperature high the pipe may be insulated.

When the expansion starts at the pressure drop the flow of microspheres also accelerates significantly. In order to optimize the disintegration of the microspheres and avoid agglomeration it is preferred if the pressure drop takes place over as short a distance as possible in the flow direction.

The expansion zone may comprise a pipe or tube with a diameter, that is (at least 2 times) wider than the diameter of the tube(s) in the heating zone. When in the form of the flexible tube, this facilitates directing the expanded thermoplastic microspheres to their end use application.

*Flow Control Device, Fluid Inlet & Fluid Metering Device*

A flow control device is disposed downstream of and in fluid communication with the outlet of the expansion zone. The function of the flow control device is to control the flow rate of the slurry (of expanded microspheres) downstream of the expansion zone, which, in turn, influences the pressure in the expansion zone. For example, the flow control device may be an electronically controllable flow restriction adjuster disposed downstream of and in fluid communication with the outlet of the expansion zone. A restricted flow area will decrease the "volume flow per unit pressure drop" and thus increase the pressure in the expansion zone (a higher pressure in the expansion zone results in a higher density of the expanded particles, and vice-versa).

In a preferred embodiment, the flow control device comprises or consists of a second pump. Examples of suitable pumps include hydraulic diaphragm pumps, piston pumps, screw pumps (e.g. eccentric screw pumps), gear pumps, rotary lobe pumps, centrifugal pumps, etc. Screw pumps are particularly preferred. If the second pump is run at a high speed (and thus generates a high second flow rate), then there will be a low pressure in the expansion zone, and if it is run at a low speed (and thus generates a low second flow rate), then there will be a higher pressure in the expansion zone.

A signal indicating the second flow rate generated by the flow control device may be directly communicated to the controller (controller described in more detail below) by the flow control device and/or the device may be further equipped with a second flow sensor disposed downstream of the flow control device and communicatively linked to the controller, the second flow sensor being configured to provide a second flow rate signal (i.e., a signal indicating the second flow rate of the microsphere slurry generated by the flow control device) to the controller. It will be appreciated that alternative techniques for communicating the second flow rate signal from the flow control device to the controller are contemplated and fall within the scope of the present disclosure.

In one embodiment, the flow control device is operatively linked to the controller, i.e., the flow control device may be controlled by the controller, thereby allowing the controller to control the second flow rate generated by the flow control device. Any suitable arrangement may be used. For example, if the flow control device is a (variable speed) second pump, then the second flow rate generated by the second pump may be directly controlled by the controller (i.e., the speed of the second pump may be directly controlled by the controller directly linked to the second pump, thereby directly controlling the second flow rate). Alternatively, the flow control device may be controlled by the second flow sensor, and the second flow sensor may be controlled by the controller (i.e., the flow control device is still operatively linked to the controller, albeit indirectly). Accordingly, the flow control device and/or the second flow sensor may be operatively linked to the controller (i.e., one or both may be controlled by the controller).

Disposed between the outlet of the expansion zone and the flow control device is a fluid inlet through which a dilution liquid is added to the slurry of expanded microspheres that has exited the expansion zone outlet and is progressing toward the flow control device. The rate of addition of the dilution liquid introduced at the fluid inlet is controlled by a fluid metering device. Any suitable fluid metering device may be used, such as a third pump, for example, a hydraulic diaphragm pump, a piston pump, a screw pump (e.g. eccentric screw pump), a gear pump, a rotary lobe pump, a centrifugal pump, etc. The device of the present disclosure may further be provided with a conduit for transportation of the dilution liquid to the fluid metering device, for example from a tank holding the dilution liquid. In one embodiment, the liquid medium of the slurry (the carrier liquid) of expandable microspheres and the dilution liquid introduced at the fluid inlet are substantially the same.

The fluid metering device generates a third flow rate (of the dilution liquid) which, in turn, controls the addition rate of the dilution liquid introduced at the fluid inlet. The flow of the dilution liquid is controlled to obtain a desired final solid content in the expanded slurry. A signal indicating the third flow rate generated by the fluid metering device may be directly communicated to the controller (controller described in more detail below) by the fluid metering device and/or the device may be further equipped with a third flow sensor communicatively linked to the controller, the third flow sensor being configured to provide a third flow rate signal (i.e., a signal indicating the third flow rate of the dilution liquid generated by the fluid metering device) to the controller. Typically, the third flow sensor would be disposed between the fluid metering device and the fluid inlet. It will be appreciated that alternative techniques for communicating the third flow rate signal from the fluid metering device to the controller are contemplated and fall within the scope of the present disclosure.

In one embodiment, the fluid metering device is operatively linked to the controller, i.e., the fluid metering device may be controlled by the controller, thereby allowing the controller to control the third flow rate generated by the fluid metering device. Any suitable arrangement may be used. For example, if the fluid metering device is a (variable speed) third pump, then the third flow rate generated by the third pump may be directly controlled by the controller (i.e., the speed of the third pump may be directly controlled by the controller directly linked to the third pump, thereby directly controlling the third flow rate). Alternatively, the fluid metering device may be controlled by the third flow sensor, and the third flow sensor may be controlled by the controller (i.e., the fluid metering device is still operatively linked to the controller, albeit indirectly). Accordingly, the fluid metering device and/or the third flow sensor may be operatively linked to the controller (i.e., one or both may be controlled by the controller).

The dilution liquid introduced at the fluid inlet is not particularly limited. For the avoidance of doubt, "liquid" as used herein means a composition of matter that is in the liquid state at 25°C and atmospheric pressure (i.e., 1 atm). Preferably, the dilution liquid is water or water-based, or an organic liquid (e.g., an organic oil, or an organic solvent, or a plasticizer such as, but not limited to, diisononyl phthalate (DINP) or cyclohexane dicarboxylic acid diisononyl ester (DINCH)) or an inorganic liquid (e.g., silicone oil), preferably an aqueous composition (i.e., a water-based composition). Non-limiting examples of aqueous compositions that may be used as the dilution liquid include those which comprise biocides, thickeners, and combinations thereof. Preferred aqueous compositions are those which comprise water, one or more biocides, and one or more thickeners.

The device according to the present disclosure is preferably equipped with a distribution pipe connecting the outlet of the expansion zone with the flow control device, with the fluid inlet disposed in the distribution pipe at a location between the outlet of the expansion zone and the flow control device. Of course, any suitable arrangement of this element of the device of the present disclosure that achieves the same overall flow of materials within the device is envisaged within the scope of the present disclosure.

The device according to the present disclosure may further comprise one or more mixing elements downstream of the flow control device, such as a static mixer. If such a mixing element is included in the device according to the present disclosure, then the second flow sensor may be disposed downstream of said mixing element or may be disposed between the flow control device and the mixing element.

*Controller*

The device according to the present disclosure comprises a controller operatively linked to at least one of the first pump (first flow rate), the flow control device (second flow rate), and the fluid metering device (third flow rate), wherein the controller calculates the density of expanded microspheres in response to the initial density value, the initial solid content value, the first flow rate, the second flow rate, and the third flow rate, and wherein the controller controls the density of the expanded microspheres by controlling at least one of the first flow rate, the second flow rate, and the third flow rate.

Preferably, at least the flow control device is operatively linked to the controller. Preferably, the flow control device and the fluid metering device are operatively linked to the controller. Preferably, the flow control device, the fluid metering device, and the first pump are operatively linked to the controller. The operative link may be direct (i.e., a direct link between the controller and the respective pump or device) or the operative link may be indirect (e.g., via a flow sensor).

In a preferred embodiment, the controller is communicatively linked to at least the first pump, the flow control device, and the fluid metering device. The controller is more preferably communicatively linked to at least the first pump, the flow control device, the fluid metering device, the first flow sensor, the second flow sensor, and the third flow sensor. For the avoidance of doubt, the term "communicatively linked" as used herein means capable of data transfer between the linked devices, whereas the term "operatively linked" as used herein means the capable of being controlled, i.e., "the controller is operatively linked to at least the flow control device" means the flow control device is capable of being controlled by the controller.

As used herein, the term "controller" refers to any hardware, software, firmware, electronic control component, processing logic, and/or processor device, individually or in any combination, that provide the described functionality, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

Preferably, the controller includes at least one processor and a computer readable storage device or media. The processor may be any custom made or commercially available processor, a central processing unit (CPU), a graphics processing unit (GPU), a semiconductor-based microprocessor (in the form of a microchip or chip set), a macroprocessor, any combination thereof, or generally any device for executing instructions. The computer readable storage device or media may include volatile and nonvolatile storage in read-only memory (ROM), random-access memory (RAM), and keep-alive memory (KAM), for example. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller in controlling the density of the expanded microspheres. The instructions may include one or more separate programs, each of which comprises an ordered listing of executable instructions for implementing logical functions. The instructions, when executed by the processor, receive and process the first flow rate signal related to the first flow rate generated by the first pump, the second flow rate signal related to the second flow rate generated by the flow control device, the third flow rate signal related to the third flow rate of the dilution liquid, and optionally one or both of the initial density value and/or the initial solid content value, and perform logic, calculations, methods and/or algorithms for automatically controlling the density of the expanded microspheres.

The controller may optionally comprise a user interface (e.g., a GUI) to allow users to directly interact with the device of the present disclosure, such as to input the initial density value and the initial solid content value and/or control the first flow rate, the second flow rate, and/or the third flow rate.

In an exemplary embodiment, the controller may be programmed to control the dry density of the expanded microspheres ($kg/m^3$) according to the following calculations ("user input" means predetermined values that are input into the controller by the user):

$$Act\_MS\_dens = Dens\_corr * (MFT\_FI01)/(FI02 - MF\_liquid\_total/ Dens\_liquid) * 1000$$

wherein:

$Act\_MS\_dens$ = Density of dry expanded microspheres ($kg/m^3$)

- Also referred to herein as the "set point expanded microsphere density" (user input)

MFT_FI01 = Mass flow dry in the incoming slurry (kg/min)
FI02 = Volume flow expanded slurry out **(second flow rate;** L/min)
MF_liquid_total = Mass flow of liquid in the outgoing slurry (kg/min)
Dens_liquid = density of liquid (constant; user input)
Dens_corr = Correction factor [correction factor compensates for blowing agent lost from microspheres during expansion and is determined by dividing the calculated value by an empirically determined [pycnometer] value; user input]

The mass flow dry in the incoming slurry (MFT_FI01) is determined by:

$$MFT\_FI01 = (SC\_slurry\_in/100)* FI01* Dens\_slurry\_in$$

wherein:

SC_slurry_in = Solid content unexpanded slurry **(initial solids content value;** wt. %; user input)
Dens_slurry_in = Density unexpanded slurry **(initial density value;** kg/L; user input)
FI01 = Volume flow unexpanded slurry in **(first flow rate;** L/min)

The mass flow of liquid in the outgoing slurry (MF_liquid_total) is determined by:

$$MF\_liquid\_total = MFT\_FI01/ (SC\_slurry\_out/100)- MFT\_FI01$$

wherein:

SC_slurry_out = Set point solid content expanded slurry (%; user input)
To achieve the set point solid content of the expanded slurry (SC_slurry_out), the set point (i.e., predetermined) **third flow rate** (SP_FC03; L/min) is determined by:

$$SP\_FC03 = (MF\_liquid\_total -MF\_liquid\_slurry\_in)/Dens\_liquid$$

wherein:

$$MF\_liquid\_slurry\_in = FI01* Dens\_slurry\_in - MFT\_FI01$$

In another exemplary embodiment, the controller may be programmed to control the wet density of the of expanded microspheres (kg/L) according to the following calculations:

$$Dens\_slurry\_out = MF\_tot/ FI02$$

wherein:

Dens_slurry_out = Density expanded slurry (kg/L)

$$MF\_tot = FC03* Dens\_liquid+ FI01* Dens\_slurry\_in$$

Dens_liquid = density of liquid (constant; user input)
Dens_slurry_in = Density unexpanded slurry **(initial density value;** kg/L; user input)
FI01 = the **first flow rate** (preferably measured by the first flow sensor)
FI02 = the **second flow rate** (preferably measured by the second flow sensor)
FC03 = the **third flow rate** (preferably measured by the third flow sensor, but may also correspond to the set point third flow rate, SP_FC03)

In both exemplary embodiments, the density of liquid, the initial solids content value, and the initial density value will, for any given slurry, be constant values, hence the density of the expanded slurry can be controlled by controlling the first, second, and/or third flow rates. In practice, however, the first flow rate tends to be somewhat constrained (in order to maintain the preferred pressure in the heating zone), as does the third flow rate (as the final solids content (wt. %) is typically kept within a reasonably narrow range for practical purposes). As such, the density of the expanded microspheres is typically controlled by controlling the second flow rate. This is particularly the case when the flow control device is the second pump, wherein the density of the expanded microspheres can be controlled by controlling the speed of the pump.

It is noted that various elements of the present disclosure, including but not limited to preferred ranges for the various parameters, can be combined unless they are mutually exclusive.

**Figures**

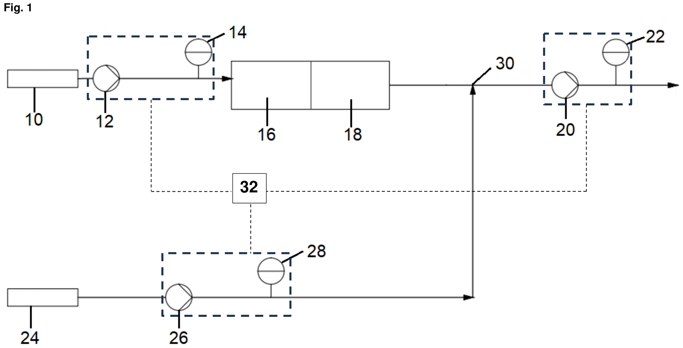

Figure 1 provides a simplified schematic of a preferred embodiment of device of the present disclosure: **10** = tank holding the slurry of unexpanded, expandable microspheres; **12** = first pump; **14** = first flow sensor; **16** = heating zone; **18** = expansion zone; **20** = flow control device (second pump); **22** = second flow sensor; **24** = tank holding the dilution liquid; **26** = fluid metering device (third pump); **28** = third flow sensor; **30** = fluid inlet; **32** = controller.

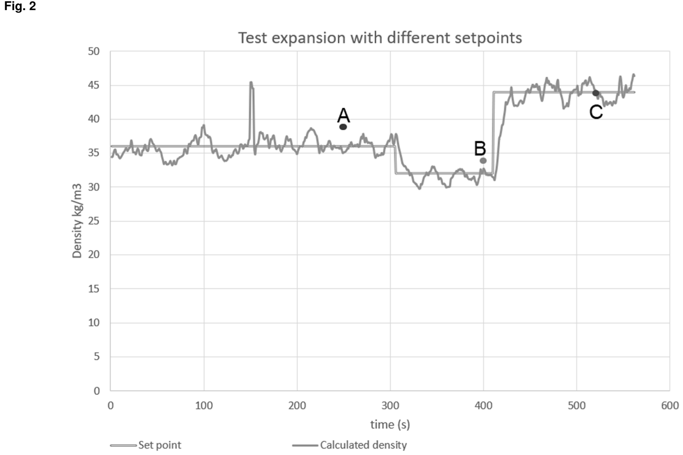

Figure 2 charts the set points, calculated expanded microsphere densities, and experimental expanded microsphere densities (pycnometer; points A, B and C) of Example 2.

**EXAMPLES**

The present disclosure will be elucidated by the following examples without being limited thereto or thereby.

Example 1

To evaluate the effectiveness of the device of the present disclosure, a series of tests were performed wherein expanded microspheres obtained from the device of the present disclosure (calculated density) were evaluated using a pycnometer. The following table compares the set point expanded microsphere density automatically determined by the device of the present disclosure (Act_MS_dens) against with expanded microsphere density determined by a pycnometer (per the device of WO2019192936).

| Expanded Microsphere Density (kg/m$^3$) | |
|---|---|
| **Calculated density** | **Pycnometer** |
| 32.5 | 33.9 |
| 34.2 | 34.8 |
| 35.6 | 34.9 |
| 36.6 | 38.9 |
| 44.7 | 43.8 |

The calculated density (Act_MS_dens) correlated well with the experimentally determined density (pycnometer).

Example 2

In this example, the device of the present disclosure was run at three different set point expanded microsphere densities ("Act_MS_dens"): 36, 32 and 44 kg/m$^3$. At each set point, a sample of expanded microspheres was recovered from the device and the expanded density determined experimentally (pycnometer).

As shown in Figure 2, the calculated values (based on sensor input) mirrored the set point values, demonstrating that the controller was reliably controlling the expanded microsphere density, and the calculated values also correlated well with the experimentally determined values (pycnometer; A = 38.9 kg/m$^3$, B = 33.9 kg/m$^3$, C = 43.8 kg/m$^3$), thus confirming the reliability of the automated device.

It is expected that this automation of the expanded microsphere density will automate the quality control (QC) process, which would present a substantial improvement in terms of cost and time savings.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

**Claims**

1. A device for expanding unexpanded, thermally expandable microspheres comprising:

   - a heating zone having an inlet and an outlet, wherein the inlet is configured to receive a slurry of unexpanded, thermally expandable microspheres;
   - a first pump upstream of and in fluid communication with the heating zone inlet;
   - an expansion zone with an inlet and an outlet, said inlet of the expansion zone being connected to the outlet of the heating zone, wherein the expansion zone is configured to be at a lower pressure than the heating zone;
   - a flow control device downstream of and in fluid communication with the outlet of the expansion zone;
   - a fluid inlet disposed between the outlet of the expansion zone and the flow control device;
   - a fluid metering device configured to control an addition rate of a dilution liquid introduced at the fluid inlet; and
   - a controller, wherein at least one of the first pump, the flow control device, and the fluid metering device is operatively linked to the controller, and wherein the controller is programmed to:

      receive at least a first flow rate signal related to a first flow rate generated by the first pump, a second flow rate signal related to a second flow rate generated by the flow control device, and a third flow rate signal related to a third flow rate of the dilution liquid,
      calculate the density of expanded microspheres in response to at least the first flow rate, the second flow rate, and the third flow rate, and
      control the density of the expanded microspheres by controlling at least one of the first flow rate, the second flow rate, and the third flow rate.

2. The device of claim 1, wherein the device further comprises a first flow sensor disposed between the first pump and the inlet of the heating zone and communicatively linked to the controller, the first flow sensor configured to provide the first flow rate signal to the controller.

3. The device of claims 1 or 2, wherein the device further comprises a second flow sensor disposed downstream of the flow control device and communicatively linked to the controller, the second flow sensor configured to provide the second flow rate signal to the controller.

4. The device of any one of claims 1-3, wherein the device further comprises a third flow sensor communicatively linked to the fluid metering device and the controller, the third flow sensor configured to provide the third flow rate signal to the controller.

5. The device of any one of claims 1-4, wherein the flow control device is a second pump or a flow adjuster, preferably a second pump.

6. The device of any one of claims 1-5, wherein the fluid metering device is a third pump.

7. The device of any one of claims 1-6, wherein the device further comprises a static mixer disposed downstream of the flow control device.

8. The device of any one of claims 1-7, wherein the flow control device is operatively linked to the controller, and wherein the controller is programmed to control the density of the expanded microspheres by controlling the second flow rate.

9. The device of claim 8, wherein the fluid metering device is operatively linked to the controller, and wherein the controller is programmed to control the density of the expanded microspheres by controlling the second flow rate and the third flow rate.

10. A process for expanding unexpanded, thermally expandable microspheres comprising a polymer encapsulating a blowing agent, wherein said blowing agent is a liquid having a boiling temperature not higher than the softening temperature of the polymer shell, the process comprising:

   - feeding a slurry of unexpanded, thermally expandable microspheres into a heating zone using a first pump operating at a first pump speed to generate a first flow rate,
- heating the microspheres to a temperature above their softening temperature, while under a pressure sufficiently high to ensure they do not fully expand;
- passing the so-heated microspheres from the heating zone to an expansion zone, such that a pressure drop is created, resulting in a pressure in the expansion zone sufficiently low for the microspheres to expand,
- removing the expanded microspheres from the expansion zone and diluting the expanded microspheres with a dilution liquid introduced at a fluid inlet by a fluid metering device operating at a third flow rate to obtain a final slurry solid content value, and
- transporting the diluted expanded microspheres to a flow control device operating at a second flow rate;

wherein a controller operatively linked to at least one of the first pump, the flow control device, and the fluid metering device, calculates the density of expanded microspheres in response to at least the first flow rate, the second flow rate, and the third flow rate, and controls the density of the expanded microspheres by controlling at least one of the first flow rate, the second flow rate, and the third flow rate.

11. The process of claim 10, wherein the first flow rate is determined by a first flow sensor disposed between the first pump and the inlet of the heating zone and communicatively linked to the controller, wherein the second flow rate is determined by a second flow sensor disposed downstream of the flow control device and communicatively linked to the controller, and wherein the third flow rate is determined by a third flow sensor communicatively linked to the fluid metering device and the controller.

12. The process of claims 10 or 11, wherein the flow control device is a second pump operating at a second pump speed to generate the second flow rate.

13. The process of any one of claims 10-12, wherein the dilution liquid is water or an aqueous composition.

14. The process of any one of claims 10-13, wherein the controller controls the density of the expanded microspheres by controlling at least the second flow rate.

15. The device of any one of claims 1-9 or the process of any one of claims 10-14, wherein the controller is further programmed to receive an initial density value and/or an initial solid content value for the slurry of unexpanded, thermally expandable microspheres, and to calculate the density of expanded microspheres in response to at least the first flow rate, the second flow rate, the third flow rate, and one or both of the initial density value or the initial solid content value.

Fig. 1

**Fig. 2**

Test expansion with different setpoints

**EUROPEAN SEARCH REPORT**

Application Number

EP 25 20 9057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/072856 A9 (CONSTRUCTION RESEARCH & TECHNOLOGY GMBH [DE] ET AL.) 15 March 2018 (2018-03-15) * paragraph [0048] - paragraph [0060]; figures 1-3 * ----- | 1-15 | INV. B01J13/04 B29C44/34 B29C44/60 |

TECHNICAL FIELDS SEARCHED (IPC)

B01J
B29C

The present search report has been drawn up for all claims

| Place of search | Date of completion of the search | Examiner |
|---|---|---|
| The Hague | 6 March 2026 | Mc Donnell, Shane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 4 736 999 A1**

## ANNEX TO THE EUROPEAN SEARCH REPORT
## ON EUROPEAN PATENT APPLICATION NO.

EP 25 20 9057

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2026

| Patent document cited in search report | | Publication date | Patent family member(s) | | Publication date |
|---|---|---|---|---|---|
| US 2018072856 | A9 | 15-03-2018 | CA | 2969868 A1 | 16-06-2016 |
| | | | CN | 107257822 A | 17-10-2017 |
| | | | EA | 201791285 A1 | 30-03-2018 |
| | | | EP | 3230225 A1 | 18-10-2017 |
| | | | US | 2017275428 A1 | 28-09-2017 |
| | | | WO | 2016091739 A1 | 16-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3615972 A
- US 5484815 A
- US 7192989 B
- US 4513106 A
- WO 2014198532 A
- WO 2016091847 A
- WO 2016091739 A
- WO 2019192936 A
- US 3945956 A
- US 4287308 A
- US 5536756 A
- US 6235800 B
- US 6235394 B
- US 6509384 B
- US 6617363 B
- US 6984347 B
- US 20040176486 A
- EP 486080 A
- EP 566367 A
- EP 1067151 A
- EP 1230975 A
- EP 1288272 A
- EP 1598405 A
- EP 1811007 A
- EP 1964903 A
- WO 2002096635 A
- WO 2004072160 A
- WO 2007091960 A
- WO 2007091961 A
- WO 2007142593 A
- JP 62286534 A
- JP 2005272633 A
- EP 3678768 A
- EP 3713664 A
- EP 3880744 A
- EP 4153347 A
- EP 4294557 A
- EP 4126333 A
- EP 4126334 A
- WO 2024089208 A